# EUROPÄISCHE PATENTSCHRIFT

(11) **EP 2 824 352 B1**
(45) Veröffentlichungstag und Bekanntmachung des Hinweises auf die Patenterteilung: **15.11.2017**
(21) Anmeldenummer: 14002301.1
(22) Anmeldetag: 04.07.2014
(51) Int. Cl.: F16D 55/225, F16D 65/092, F16D 65/097

(54) **Bremsbelaghalterung einer Scheibenbremse für ein Nutzfahrzeug**
Brake lining mount of a disc brake for a commercial vehicle
Fixation de garniture de frein d'un frein à disque pour un véhicule utilitaire

(30) Priorität: 12.07.2013 DE 102013011656
(43) Veröffentlichungstag der Anmeldung: 14.01.2015
(73) Patentinhaber: KNORR-BREMSE Systeme für Nutzfahrzeuge GmbH, 80809 München (DE)
(72) Erfinder: Heindl, Martin, 94535 Eging am See (DE)

(56) Entgegenhaltungen:
- EP-A1- 0 339 984
- WO-A2-03/038298
- DE-B3-102006 023 964

## Beschreibung

Die Erfindung betrifft eine Bremsbelaghalterung einer Scheibenbremse für ein Nutzfahrzeug gemäß dem Oberbegriff des Anspruchs 1.

Aus der DE 40 20 287 A1 ist eine Bremsbelaghalterung entsprechend der Gattung bekannt, bei der zur Positionssicherung der beiden Bremsbeläge diese jeweils mit einer Belaghaltefeder versehen sind, die im oberen, einer Montageöffnung des Bremssattels zugewandten Randbereich derart am jeweiligen Bremsbelag befestigt sind, dass sie von einem sich quer dazu, also in Achsrichtung der Bremsscheibe erstreckenden Belaghaltebügel unter Vorspannung in den Belagschacht eines ortsfesten Bremsträgers oder eines Bremssattels gedrückt werden. Dabei ist der Belaghaltebügel in zwei sich gegenüberliegenden, die Montageöffnung begrenzenden Bereichen des Bremssattels festgelegt.

Die Lagerung der Bremsbeläge unter Federspannung dient sowohl einem Toleranzausgleich als auch einer Reduzierung bzw. einer Verhinderung der Entstehung von Klappergeräuschen, wie sie ansonsten im Fahrbetrieb des Fahrzeugs auftreten würden.

Um den Belaghaltebügel mit einfachen Mitteln an- und abzubauen, ist er einerseits in eine taschenförmige Aufnahme des Bremssattels eingesteckt und andererseits mittels eines Sicherungsbolzens, einer Scheibe und eines Splintes am Bremssattel befestigt, wobei der sich am Belaghaltebügel abstützende Sicherungsbolzen durch ein am Bremssattel angeformtes Befestigungsauge geführt ist, das eine Fensteröffnung des Belaghaltebügels durchtritt.

Der bekannte Belaghaltebügel ist als Blechteil ausgebildet mit einem im Wesentlichen rechteckigen Querschnitt, so dass er mit einer ebenen Unterseite an den Belaghaltefedern anliegt.

Die Funktionsfähigkeit des Belaghaltebügels ist also nur mittels vieler Einzelteile, insbesondere Sicherungsteilen möglich, was naturgemäß nur mit entsprechenden Beschaffungs- und Montagekosten verbunden ist.

Dies trifft gleichermaßen auf eine andere bekannte Art der Befestigung des Belaghaltebügels zu, bei der dieser mit dem Bremssattel verschraubt ist. Hierzu muss eine Gewindebohrung in den Bremssattel eingebracht werden, was naturgemäß nur relativ aufwändig zu bewerkstelligen ist.

Da Scheibenbremsen als Serienteile in großen Stückzahlen hergestellt werden, steht diese Mehrteiligkeit der stets gestellten Forderung nach einer Vereinfachung und damit Kostenreduzierung entgegen.

In der DE 10 2005 059 801 A1 ist eine gattungsfremde Bremsbelaghalterung geoffenbart, bei der als Belaghaltefedern keine Blattfedern zum Einsatz kommen, sondern aus einem Federdraht gebogene, die die Montageöffnung in Achsrichtung der Bremsscheibe überspannen.

Bei dieser Konstruktion wird auf den prinzipiellen Einsatz eines Belaghaltebügels verzichtet, der in einer Ausführungsvariante lediglich als redundantes Bauteil in Form eines Blech-Stanzteiles vorgesehen ist.

In der DE 10 2006 023964 B3 ist eine gattungsgemäße Scheibenbremse thematisiert, bei der der Belaghaltebügel aus einem gebogenen Draht besteht, mit zwei parallel und abständig zueinander angeordneten, auf den Belaghaltefedern der Bremsbeläge aufliegenden Schenkeln.

Eine vergleichbare Konstruktion ist der EP 0 339 984 A1 zu entnehmen.

Der Erfindung liegt die Aufgabe zugrunde, eine Bremsbelaghalterung der gattungsgemäßen Art so weiterzuentwickeln, dass sie mit einer geringen Anzahl funktionsrelevanter Teile realisierbar und damit einfacher und kostengünstiger herstell- und montierbar ist.

Diese Aufgabe wird durch eine Bremsbelaghalterung mit den Merkmalen des Anspruchs 1 gelöst.

Eine in diesem Sinne ausgebildete Bremsbelaghalterung zeichnet sich vor allem dadurch aus, dass der Belaghaltebügel als Einzelteil funktionsfähig ist, so dass auf weitere Bauteile prinzipiell verzichtet werden kann.

Dies betrifft insbesondere die erwähnten Sicherungsteile, wie einen separaten Sicherungsbolzen, der Bestandteil des neuen Belaghaltebügels ist.

Sowohl die Herstellung wie auch die Montage des Belaghaltebügels gestaltet sich erheblich einfacher als die des bekannten, wobei der neue erfindungsgemäß aus einem gebogenen Draht bestehende Belaghaltebügel praktisch in einer vollautomatischen Fertigung hergestellt werden kann.

Hierzu zählt das Ablängen von einem Coil und das automatische Biegen mit einer dazu geeigneten, an sich bekannten Vorrichtung.

Als Draht bietet sich ein Federdraht an, der so gebogen ist, dass er einerseits die Montageöffnung unter Anlage an den Belaghaltefedern überspannt und andererseits in die Querbohrung des Befestigungsauges eingreift, während das gegenüberliegende Ende in die aus dem Stand der Technik bekannte eingeformte Tasche des Bremssattels eingesteckt ist.

Dabei kann dieses eingesteckte Ende vergleichbar dem in die Querbohrung eingeführten, einen Sicherungsbolzen bildenden Ende entsprechend ausgebildet sein, d.h., sowohl in Biegerichtung wie auch in seiner Formgebung.

Denkbar ist jedoch auch, das in die Tasche eingesteckte Ende im Wesentlichen ungeformt zu dem auf dem die Montageöffnung überspannenden Schenkel des Belaghaltebügels zu belassen.

Zur Verschiebesicherung des angeformten Sicherungselements kann in an sich bekannter Weise ein Sicherungsteil angeschlossen sein, beispielsweise in Form eines Splintes oder eines Seegerrings.

Neben der Vereinfachung durch eine Reduzierung der erforderlichen Bauteile zeichnet sich die Erfindung noch dadurch aus, dass sie praktisch ohne Veränderung der Funktionsteile, wie Bremssattel, Bremsbelägen oder dergleichen montierbar ist. D.h., eine nachträgliche Ausrüstung, beispielsweise bei einem Bremsbelagwechsel, ist ohne weiteres möglich.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1a): einen Teilausschnitt einer montierten Bremsbelaghalterung in einer perspektivischen Ansicht
- Figur 1b): eine Einzelheit der Bremsbelaghalterung, gleichfalls schaubildlich dargestellt
- Figur 2a): ein weiteres Ausführungsbeispiel einer Bremsbelaghalterung nach der Erfindung in montierter Stellung
- Figur 2b): die Bremsbelaghalterung nach Figur 2a) als Einzelheit.

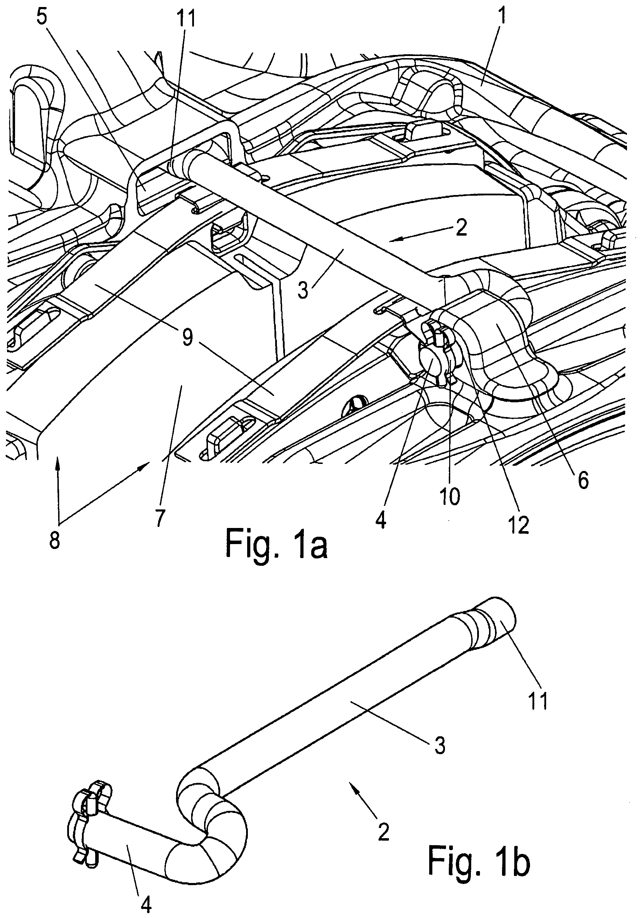

In den Figuren 1a) und 2a) ist jeweils ein Teilausschnitt einer Scheibenbremse für ein Nutzfahrzeug dargestellt, mit einem Bremssattel 1, in dem zwei, beidseitig einer nicht gezeigten Bremsscheibe zugeordnete Bremsbeläge 8 positioniert sind.

Dabei sind die Bremsbeläge 8 jeweils mittels einer Belaghaltefeder 9 federbelastet in einem Belagschacht eines ortsfesten, nicht dargestellten Bremsträgers oder im Bremssattel 1 gehalten.

Die jeweilige Belaghaltefeder 9 erstreckt sich quer zur Achsrichtung der Bremsscheibe und ist radial auslenkbar am Bremsbelag 8 befestigt.

Mittels eines sich in Achsrichtung der Bremsscheibe erstreckenden, eine Montageöffnung 7 des Bremssattels 1 überspannenden Belaghaltebügels 2, der sich mit einem ausgebildeten Schenkel 3 an den Belaghaltefedern 9 abstützt, sind diese unter Vorspannung gesetzt, so dass die Bremsbeläge 8 gegen den Grund des Belagschachtes gedrückt werden.

An den Schenkel 3 schließt sich einerseits ein Endbereich 11 an, der in eine eingeformte Tasche des Bremssattels 1 eingesteckt ist, während an das andere Ende des Schenkels 3 ein Sicherungsbolzen 4 angeformt ist, der durch eine Querbohrung 12 eines Befestigungsauges 6 des Bremssattels 1 gesteckt ist.

Gemäß der Erfindung sind der Belaghaltebügel 2 und der Sicherungsbolzen 4 einstückig aus einem gebogenen Draht gebildet, wobei an der der Einstecköffnung des Sicherungsbolzens 4 gegenüberliegenden Seite ein Sicherungsteil 10, im Beispiel als Splint ausgebildet, formschlüssig mit dem Sicherungsbolzen 4 verbunden ist und eine Verschiebesicherung bildet. Anstelle eines Splintes kann auch ein Seegerring oder dergleichen vorgesehen sein.

Bei dem in den Figuren 1a) und 1b) erkennbaren Belaghaltebügel 2 ist das in die Tasche 5 eingesteckte Ende 11 zum Schenkel 3 axial ausgerichtet und lediglich in Richtung der Belaghaltefedern 9 geringfügig gekröpft, um das Ende 11 in die Tasche 5 einführen zu können, wobei durch den Druck der Belaghaltefedern 9 das Ende 11 gegen die Oberseite der Tasche 5 gedrückt wird.

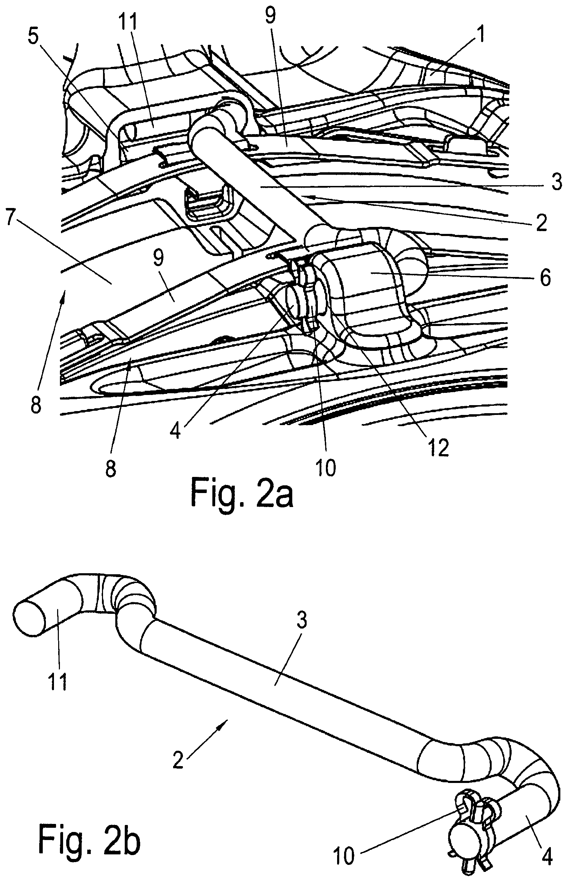

In den Figuren 2a) und 2b) hingegen ist der Belaghaltebügel 2 in seinem Endbereich 11 gleichgerichtet zum Sicherungsbolzen 4 gebogen, wobei die Länge des in der Tasche 5 einliegenden Endbereichs 11 etwa der zugeordneten Breite der Tasche 5 entspricht und somit verschiebegesichert in Umfangsrichtung der Bremsscheibe gehalten ist.

## Patentansprüche

1. Bremsbelaghalterung einer Scheibenbremse für ein Nutzfahrzeug, mit einem Belaghaltebügel (2), der sich an Belaghaltefedern (9) von beidseitig einer Bremsscheibe in einem Bremssattel (1) angeordneten Bremsbelägen (8) abstützt, wobei der Belaghaltebügel (2) eine Montageöffnung (7) des Bremssattels (1) in Achsrichtung der Bremsscheibe überspannt und zumindest einseitig mittels eines Sicherungsbolzens (4) in einem Befestigungsauge (6) des Bremssattels (1) gehalten ist, **dadurch gekennzeichnet, dass** der Belaghaltebügel (2) lediglich einen an den Belaghaltefedern (9) anliegenden Schenkel (3) aufweist, an den sich der Sicherungsbolzen (4) anschließt, wobei der Schenkel (3) und der Sicherungsbolzen (4) einstückig aus einem gebogenen Draht gebildet sind.

2. Bremsbelaghalterung nach Anspruch 1, **dadurch gekennzeichnet, dass** sich an den Schenkel (3) ein in eine Tasche (5) des Bremssattels (1) eingestecktes Ende (11) anschließt.

3. Bremsbelaghalterung nach Anspruch 2, **dadurch gekennzeichnet, dass** das Ende (11) gleichgerichtet zum angeformten Sicherungsbolzen (4) verläuft.

4. Bremsbelaghalterung nach einem der Ansprüche 2 oder 3, **dadurch gekennzeichnet, dass** das Ende (11) in seiner Länge etwa der zugeordneten Breite der Tasche (5) entspricht.

5. Bremsbelaghalterung nach Anspruch 2, **dadurch gekennzeichnet, dass** das Ende (11) achsgleich zum Schekel (3) verläuft.

6. Bremsbelaghalterung nach Anspruch 2, **dadurch gekennzeichnet, dass** das Ende (11) und/oder der Sicherungsbolzen (4) in Richtung der Belaghaltefedern (9) gekröpft sind.

7. Bremsbelaghalterung nach einem der Ansprüche 2 oder 3, **dadurch gekennzeichnet, dass** das Ende (11) und der Sicherungsbolzen (4) in ihrer Konfiguration gleich sind.

8. Bremsbelaghalterung nach einem der vorhergehenden Ansprüche, **dadurch gekennzeichnet, dass** der Sicherungsbolzen (4) an seinem freien Ende mit einem Sicherungsteil (10) versehen ist, insbesondere in Form eines Splintes oder eines Seegerringes.

9. Bremsbelaghalterung nach einem der vorhergehenden Ansprüche, **dadurch gekennzeichnet, dass** der Belaghaltebügel (2) aus einem Federdraht besteht.

## Claims

1. Brake lining holder of a disc brake for a utility vehicle, comprising a lining holder bracket (2) supported on lining holder springs (9) of brake linings (8) arranged on both sides of a brake disc in a brake calliper (1), such that the lining holder bracket (2) extends across an assembly opening (7) of the brake calliper (1) in the axial direction of the brake disc and is held on at least one side by means of a securing bolt (4) in a fixing eye (6) of the brake calliper (1), **characterised in that** the lining holder bracket (2) has only one limb (3) in contact with the lining holder springs (9), to which the securing bolt (4) is attached, wherein the said limb (3) and the securing bolt (4) are formed integrally as one piece from a bent wire.

2. Brake lining holder according to Claim 1, **characterised in that** connected to the said limb (3) there is an end (11) which is inserted into an aperture (5) of the brake calliper (1).

3. Brake lining holder according to Claim 2, **characterised in that** the said end (11) is aligned with the shaped securing bolt (4).

4. Brake lining holder according to either of Claims 2 or 3, **characterised in that** the length of the said end (11) corresponds approximately to the associated width of the said aperture (5).

5. Brake lining holder according to Claim 2, **characterised in that** the end (11) extends on the same axis as the limb (3).

6. Brake lining holder according to Claim 2, **characterised in that** the end (11) and/or the securing bolt (4) are offset in the direction of the lining holder springs (9).

7. Brake lining holder according to either of Claims 2 or 3, **characterised in that** the end (11) and the securing bolt (4) are configured alike.

8. Brake lining holder according to any of the preceding claims, **characterised in that** at its free end the securing bolt (4) is provided with a securing component (10), in particular in the form of a splint or a circlip.

9. Brake lining holder according to any of the preceding claims, **characterised in that** the lining holder bracket (2) consists of a spring wire.

## Revendications

1. Fixation de garniture de frein d'un frein à disque pour un véhicule utilitaire, comprenant une bride (2) de maintien de garniture, qui s'appuie sur des ressorts (9) de maintien de garnitures (8) de frein disposées dans un étrier (1) de frein des deux côtés d'un disque de frein, la bride (2) de maintien de garniture enjambant une ouverture (7) de montage de l'étrier (1) de frein, dans la direction axiale du disque de frein, et étant maintenue, au moins d'un côté, au moyen d'un axe (4) d'arrêt, dans un oeillet (6) de fixation de l'étrier (1) de frein, **caractérisée en ce que** la bride (2) de maintien de garniture a seulement une branche (3), qui s'applique aux ressorts de maintien de garniture et à laquelle se raccorde l'axe (4) d'arrêt, la branche (3) et l'axe (4) d'arrêt étant formés d'une seule pièce en un fil métallique incurvé.

2. Fixation de garniture de frein suivant la revendication 1, **caractérisée en ce qu'**à la branche (3) se raccorde une extrémité (11) enfilée dans une poche (5) de l'étrier (1) de frein.

3. Fixation de garniture de frein suivant la revendication 2, **caractérisée en ce que** l'extrémité (11) s'étend, en étant dirigée dans le même sens que l'axe (4) d'arrêt rattaché.

4. Fixation de garniture de frein suivant l'une des revendications 2 ou 3, **caractérisée en ce que** l'extrémité (11) correspond, dans sa longueur, à peu près à la largeur associée de la poche (5).

5. Fixation de garniture de frein suivant la revendication 2, **caractérisée en ce que** l'extrémité (11) s'étend en ayant le même axe que la branche (3).

6. Fixation de garniture de frein suivant la revendication 2, **caractérisée en ce que** l'extrémité (11) et/ou l'axe (4) d'arrêt sont coudés en direction des ressorts (9) de maintien de garniture.

7. Fixation de garniture de frein suivant l'une des revendications 2 ou 3, **caractérisée en ce que** l'extrémité (11) et l'axe (4) d'arrêt ont une même configuration.

8. Fixation de garniture de frein suivant l'une des revendications précédentes, **caractérisée en ce que** l'axe (4) d'arrêt est pourvu à son extrémité libre d'une partie (10) d'arrêt, notamment sous la forme d'une goupille ou d'un jonc seeger.

9. Fixation de garniture de frein suivant l'une des revendications précédentes, **caractérisée en ce que** l'étrier (2) de maintien de garniture est en un fil métallique à ressort.
